(19) Europäisches Patentamt

European Patent Office

Office européen des brevets

(11) Veröffentlichungsnummer: **0 017 187**
**B1**

# (12) EUROPÄISCHE PATENTSCHRIFT

(45) Veröffentlichungstag der Patentschrift:
20.10.82

(51) Int. Cl.³: **C 09 D 3/82**, C 08 J 7/04,
C 08 G 18/61

(21) Anmeldenummer: 80101670.0

(22) Anmeldetag: 28.03.80

(54) **Polysiloxan enthaltende Beschichtungsmassen, deren Verwendung und die damit beschichteten Thermoplaste.**

(30) Priorität: 10.04.79 DE 2914427

(43) Veröffentlichungstag der Anmeldung:
15.10.80 Patentblatt 80/21

(45) Bekanntmachung des Hinweises auf die Patenterteilung:
20.10.82 Patentblatt 82/42

(84) Benannte Vertragsstaaten:
BE DE FR GB IT NL

(56) Entgegenhaltungen:
DE-A-2 522 241
FR-A-1 572 724
FR-A-2 328 751
KUNSTSTOFF-HANDBUCH Bd. VII - POLYURETHANE,
1966, C. HANSEN VERLAG München,
Reprint 1976, S. 11

(73) Patentinhaber: **BAYER AG, Zentralbereich Patente,
Marken und Lizenzen, D-5090 Leverkusen 1, Bayerwerk
(DE)**

(72) Erfinder: **Steinberger, Helmut, Dr., Dönhoffstrasse 28,
D-5090 Leverkusen (DE)**
Erfinder: **Schönfelder, Manfred, Dr., Höhenstrasse 126,
D-5090 Leverkusen 3 (DE)**
Erfinder: **Moretto, Hans-Heinrich, Dr., Formesstrasse 13,
D-5000 Köln 80 (DE)**
Erfinder: **Wegner, Christian, Dr., Roggendorfstrasse 65,
D-5000 Köln 80 (DE)**

ACTORUM AG

# Polysiloxan enthaltende Beschichtungsmassen, deren Verwendung und die damit beschichteten Thermoplaste

Die vorliegende Erfindung betrifft Schutzüberzugszubereitungen, insbesondere transparente abrieb- und kratzfeste Überzüge auf transparenten thermoplastischen Polymeren, vornehmlich auf Polycarbonat.

Es besteht ein erheblicher Bedarf an unzerbrechlichen, leichten transparenten Materialien, die im Gegensatz zu Glas eine geringere Zerbrechlichkeit und niedrigeres spezifisches Gewicht aufweisen. Solche transparente Materialien und Formteile lassen sich aus Polycarbonaten, Polymethylmethacrylaten, Polystyrol oder Polyvinylchlorid herstellen. Diese Stoffe haben jedoch den Nachteil, dass sie eine leicht zu beschädigende Oberfläche aufweisen und dass sie bei Berührung mit organischen Lösungsmitteln quellen oder angelöst werden.

Zur Verbesserung dieser nachteiligen Eigenschaften von Formteilen sind bereits verschiedene Materialien und Verfahren entwickelt worden, beispielsweise Verfahren zum Beschichten mit einer Beschichtungsmasse, die als Hauptbestandteile ein Hydrolyseprodukt von Tetraalkoxysilan und ein Copolymerisat eines Fluorolefins mit einem Omega-Hydroxylalkylvinyläther enthält (US-A-3 429 845).

Aus DE-A-2 522 241 ist ein Mittel bekannt, das nach dem Auftragen auf Acylharzgegenstände eine Schutzschicht bildet. Diese Überzugsmasse wird aus teilweise hydrolysierten Siloxanverbindungen, Alkalimetall- und/oder Zinksalzen von Naphthensäure, Essigsäure und organischen Lösungsmitteln erhalten.

Die FR-A-1 572 724 beschreibt ein kalt vernetzendes System aus OH-endgestoppten Dimethylpolysiloxan und Vernetzersubstanzen. Derartige Systeme eignen sich jedoch für eine Kratzfest-Beschichtung nicht.

Nach einem anderen Verfahren werden Formteile mit einem Hydrolyseprodukt eines Alkyltrialkoxysilans beschichtet (US-A-3 451 838). Ein weiteres Verfahren verwendet zur Beschichtung von Formteilen partielle Hydrolysate von Tetraalkoxysilan und Alkyltrialkoxysilanen (japanische Patentanmeldung 56 230/1973). Weitere Vorschläge zur Beschichtung gehen von der Anwendung von Polykieselsäuren unter Mitverwendung von Acrylcopolymerisaten und verätherten Methylolmelaminen aus, die den behandelten Oberflächen eine gute Abriebbeständigkeit und Wasserbeständigkeit verleihen sollen (japanische Patentanmeldung 34 214/1974 bzw. FR-A-2 328 751). Anstelle von gelösten Polykieselsäuren lassen sich auch Dispersionen kolloidaler Kieselsäure zusammen mit Teilhydrolysaten von Alkyltrialkoxysilanen verwenden (DE-A-2 506 202, DE-A-2 446 279).

Aus Gunststoff-Handbuch (Bd. VII-Polyurethane, 1966, C. Hansen Verlag München, Reprint 1976, S. 11) ist es bekannt, hydroxylgruppenhaltige Verbindungen mit Isocyanaten zu blockieren.

Materialien, die nach einem der vorher beschriebenen Verfahren hergestellt wurden, konnten bisher nur begrenzte wirtschaftliche Bedeutung erlangen, da sie schwierig anzuwenden sind, eine mässige Feuchtigkeitsbeständigkeit haben oder zu aufwendig sind. Ferner ist die Elastizität und Haftung des ausgehärteten Überzugsfilmes für Anwendungszwecke, in denen die beschichteten Formkörper zeitweiligen Formveränderungen ausgesetzt sind, nicht ausreichend.

Es wurden auch Versuche unternommen, die Haftung und Filmelastizität mit Kombinationen von Aminoalkylalkoxysilanen mit Acryloxyalkylalkoxysilanen oder Vinylalkoxysilanen sowie Kombinationen von Epoxyalkylalkoxysilanen mit Acryloxyalkylalkoxysilanen oder Vinylalkoxysilanen zu verbessern. Es zeigte sich jedoch, dass aus diesen Stoffen hergestellte Überzüge eine schlechte Kratzfestigkeit besitzen.

Der vorliegenden Erfindung lag die Aufgabe zugrunde, eine Überzugsmasse zu schaffen, die auf der Oberfläche von Formkörpern aus organischen Thermoplasten wie zum Beispiel Polycarbonat oder Polymethylmethacrylat eine Schutzschicht mit hoher Oberflächenhärte, Kratzfestigkeit, Lösungsmittelbeständigkeit und Beständigkeit gegenüber Haarrissbildung bei formverändernder Beanspruchung bildet.

Die Lösung der Aufgabe besteht darin, dass durch Zusatz blockierter Polyisocyanate zur Polykieselsäurekomponente die Elastizität und die Haftung des Beschichtungsmittels auf dem Trägermaterial erheblich verbessert wird, wobei Härte, Kratzfestigkeit und Lösungsmittelbeständigkeit der Beschichtung in vollem Umfang erhalten bleiben.

Gegenstand der Erfindung ist eine Beschichtungsmasse, die im wesentlichen besteht aus:

A) 10-40 Gew.-%, bezogen auf das Gesamtgewicht der Beschichtungsmasse, einer teilweise hydrolysierten Siloxanverbindung, die durch Hydrolyse in Wasser bei etwa 50-80°C während einer Zeit von etwa 1-12 Stunden mindestens einer der folgenden Verbindungen erhalten wird:

(a) eines Kohlenwasserstofftrialkoxysilans der Formel $R'Si(OR'')_3$, worin R' eine Alkylgruppe mit 1 bis 4 Kohlenstoffatomen, eine Phenyl- oder Vinylgruppe und R'' eine Alkylgruppe mit 1 bis 4 Kohlenstoffatomen bedeuten,

und/oder

(b) Co-Kondensationsprodukten von (a) und 1 bis 40 Gew.-% eines Phenyl- oder Vinyltrialkoxysilans, worin die Alkoxygruppe 1 bis 4 Kohlenstoffatome enthält,

und/oder

(c) Co-Kondensationsprodukten von 1 Mol von (a) und 0,05 bis 1 Mol Tetraalkoxysilan, worin die Alkoxygruppe 1 bis 4 Kohlenstoffatome enthält,

und/oder

(d) Co-Kondensationsprodukten von 1 Mol von (a) und 0,05 bis 1 Mol Dialkyldialkoxysilan, worin die Alkyl- und Alkoxygruppen 1 bis 4 Kohlenstoffatome enthalten,

B) 0 bis 40 Gew.-%, bezogen auf das Gesamtgewicht der Beschichtungsmasse, einer wässrigen Dispersion von kolloidalem Siliziumdioxid,

C) 0 bis 5 Gew.-%, bezogen auf das Gesamtgewicht des Überzugsmittels, eines veretherten Methylolmelamins,

D) 0,5 bis 30 Gew.-%, bezogen auf das Gesamtgewicht der Beschichtungsmasse, Essigsäure sowie

E) ein inertes organisches Lösungsmittel, dadurch gekennzeichnet, dass die Beschichtungsmasse zusätzlich 0,05 bis 15 Gew.-%, bezogen auf das Gesamtgewicht der Beschichtungsmasse, eines blockierten Polyisocyanates enthält.

Das Mittel wird auf die Oberfläche von z.B. Polycarbonatgegenständen aufgebracht und gehärtet. Die beschichteten Polycarbonatgegenstände besitzen ausgezeichnete Eigenschaften wie Oberflächenhärte, Kratzbeständigkeit, Lösungsmittelbeständigkeit und Beständigkeit gegen Haarrissbildung bei Beanspruchung.

Die neuen erfindungsgemässen Überzugsmittel besitzen eine lange Topfzeit. Sie können auf die Oberfläche von Polycarbonatformgegenständen aufgebracht und bei einer Temperatur von ungefähr 80°C bis ungefähr 120°C gehärtet werden, um die Lösungsmittel, die darin enthalten sind, zu verdampfen und um eine Kondensationsreaktion zu erreichen.

Die Kohlenwasserstoff-trialkoxysilane (1) sind multifunktionelle Siloxanverbindungen der Formel R'Si (RO'')₃, worin R' eine Alkylgruppe mit 1 bis 4 Kohlenstoffatomen, eine Phenyl-, oder eine Vinylgruppe bedeutet und R'' eine Alkylgruppe mit 1 bis 4 Kohlenstoffatomen bedeutet. Methyltriäthoxysilan ist bevorzugt. Ein Teilhydrolysat von Kohlenwasserstofftrialkoxysilanen wird erhalten, indem man Wasser zu Kohlenwasserstofftrialkoxysilanen bringt und das entstehende Material bei einer Temperatur von 50° bis 80°C während 1 bis 10 Stunden erwärmt. Die Herstellung solcher Teilhydrolysate ist an sich bekannt und beispielsweise in der US-Patentschrift 3 451 838, DE-OS 1 923 290 und in der US-PS 4 006 271 beschrieben.

Ein teilweise hydrolysiertes Co-Kondensationsprodukt, das im wesentlichen 1 Mol des Kohlenwasserstofftrialkoxysilans als Hauptkomponente und 0,05 bis 1 Mol Tetraalkoxy (C 1 bis C 4)-Silan als zusätzliche Komponente enthält, bildet einen Überzug mit verbesserter Härte.

Ein teilweise hydrolysiertes Co-Kondensationsprodukt aus 1 Mol Kohlenwasserstofftrialkoxysilan und 0,05 Mol Dialkyl-(C 1 bis C 4)-dialkoxy-(C 1 bis C 4)-silan bildet einen weichen Überzug.

Zusätze von wässrigen Dispersionen von kolloidalem Siliziumdioxid zum teilweise hydrolysierten (Co)-Kondensationsprodukt aus Alkyltrialalkoxysilan und gegebenenfalls Tetraalkoxysilan bilden Überzüge mit verbesserter Härte.

Die gegebenenfalls mitverwendeten verätherten Methylolmelamine sind technische Produkte, die in an sich bekannter Weise hergestellt werden. Spezielle Beispiele für diese Verbindungen sind Hexaalkoxymethylmelamine wie Hexamethoxymethylmelamin, Hexaäthoxymethylmelamin, Hexapropoxymethylmelamin, Hexaisopropoxymethylmelamin, Hexabutoxymethylmelamin und Hexacyclohexyloxymethylmelamin.

Das verätherte Methylolmelamin wird vorzugsweise in einer Menge von 0 bis 150 Gewichtsteilen auf 100 Gewichtsteile (berechnet als SiO₂) des partiellen Hydrolyseprodukts der Tetraalkoxysilanverbindung bzw. der kolloidalen Kieselsäure verwendet. Bei Zusatz von mehr als 150 Gewichtsteilen veräthertem Methylolmelamin nimmt die Haftfestigkeit und die Härte der Beschichtung ab. Der Zusatz des verätherten Methylolmelamins verleiht der Beschichtung sowohl Härte als auch Biegsamkeit.

Die erfindungsgemäss zugesetzten verkappten Polyisocyanate sind lösungsmittelfreie, gegebenenfalls 2-4 Gew.-% Polyäther enthaltende, stabile wässrige Emulsionen blockierter Isocyanate, bei denen als emulgierende Komponente Salze von Diaminosulfonsäuren verwendet werden. Sie werden hergestellt durch Umsetzung beliebiger, vorzugsweise di- bis tetrafunktioneller, Polyisocyanate mit Verbindungen, die gegenüber Isocyanatgruppen reaktionsfähige Molekülgruppierungen aufweisen. Hierfür kommen unter anderem sekundäre oder tertiäre Alkohole, C-H-acide Verbindungen, Oxime, Lactame, Phenole, N-Alkylamide, Imide, Imidazole, Triazole oder Alkalibisulfite in Frage. Vorzugsweise werden C-H-acide Verbindungen, insbesondere aktivierte Methylengruppen enthaltende Verbindungen, wie z.B. Malonsäuredialkylester, Acetessigsäurealkylester oder Acetylaceton eingesetzt.

Die Umsetzung der Polyisocyanatfunktion mit der gegenüber Isocyanatgruppen reaktionsfähigen Molekülgruppierung erfolgt in Gegenwart bestimmter Mengenanteile von aromatischen, aliphatischen oder araliphatischen Diaminsulfonsäuren bzw. derer Alkali- oder Ammoniumsalze.

Die erfindungsgemäss verwendeten blockierten Polyisocyanate sind durch Umsetzung von Polyisocyanaten mit Blockierungsmitteln wie z.B. Malonsäurediethylester oder Acetessigsäureäthylester in an sich bekannter Reaktion erhältlich. Die Löslichkeit bzw. Dispergierbarkeit des blockierten Polyisocyanats beruht in der Einbeziehung von hydrophilen Komponenten in die Additionsreaktion, deren ionische oder nichtionische wasserdispergierend wirkende Polyethylenoxid-Segmente beim Aufbau des Polymeren mit eingebaut werden.

Durch den Einbau der ionischen oder nichtionischen hydrophilen Gruppen werden die betreffenden blockierten Polyisocyanate ihrerseits so weit hydrophil, dass sie in Wasser oder in wässrig-alkoholischen Lösungen oder Zubereitungen löslich oder stabil dispergierbar und verträglich mit den für die Thermoplastbeschichtung geeigneten Zubereitungen sind.

Die erfindungsgemässe Verwendung der oben beschriebenen blockierten Isocyanate führt zu Überzügen mit verbesserter Haftung und Elastizität, ohne die Kratzfestigkeit und Härte des Überzuges nachteilig zu beeinflussen.

Die organischen Lösungsmittel, die zusätzlich zur Essigsäure verwendet werden, sind nicht kritisch. Es kommen hierfür Alkohole, Ketone, Äther und/oder aromatische Kohlenwasserstoffe in Betracht. Zur Herstellung des Überzugsmittels sind von diesen Lösungsmitteln Äthanol und Isopropanol besonders bevorzugt. Die Menge an organischen Lösungsmitteln muss ausreichen, um die teilweise hydrolysierte Verbindung zusammen mit der Essigsäure und den übrigen erwähnten Zusatzmitteln vollständig zu lösen und um die Konzentration an der teilweise hydrolysierten Verbindung auf 5 bis 15 Gew.-%, berechnet als Feststoffe und bezogen auf das Gesamtgewicht des Überzugsmittels, einzustellen.

Um erfindungsgemäss Thermoplaste mit dem Überzugsmittel zu beschichten, kann man irgendwelche Verfahren wie Eintauch-, Sprüh- und Giessverfahren verwenden. Die so beschichteten Thermoplastkörper werden dann erwärmt, um das Überzugsmittel zu härten. Die Härtungstemperatur kann überlicherweise im Bereich von 60 bis 140°C erfolgen.

Da die notwendige Härtungstemperatur umso höher ist, je kürzer die Härtungszeit ist, ist es bevorzugt, die aufgetragene Schicht bei einer Temperatur zu härten, die so hoch wie möglich ist, aber niedriger als die Wärmeverformungstemperatur des Thermoplasten. Im allgemeinen ist es bevorzugt, bei 80 bis 120°C während 2 bis 10 Stunden zu härten.

Im folgenden wird die Erfindung noch näher erläutert:

Beispiel

Herstellung der Grundkomponenten:

a) Zu 300 g kolloidaler Kieselsäure mit 30 Gew.-% SiO$_2$-Gehalt werden 19,8 g Eisessig, 210 g destilliertes Wasser und 227 g Isopropanol gegeben. Nach gründlicher Durchmischung werden 900 g Methyltriethoxysilan zugesetzt und die Mischung unter Rühren auf 60°C erwärmt. Man belässt während 4 Stunden bei dieser Temperatur und fügt anschliessend weitere 1200 g Isopropanol zur Mischung hinzu. Nach Abkühlen des Produktes auf Raumtemperatur wird die schwach opake Lösung filtriert.

b) In einem mit Rührer und Rückflusskühler versehenen Gefäss werden 340 g Isopropanol, 190 g Tetraethoxysilan und 360 g Methyltriethoxysilan vorgelegt. Dieses Gemisch wird mit 180 g 0,05 n Salzsäure versetzt und zur Durchführung der Cohydrolyse fünf Stunden unter Rückfluss erwärmt. Nach der Umsetzung wird das Gemisch auf Raumtemperatur abgekühlt. Man erhält eine Lösung, die ein Teilhydrolysat von Tetraethoxysilan (5,1 Prozent, berechnet als SiO$_2$) und Teilhydrolysat von Methyltriethoxysilan (12,6 Prozent, berechnet als CH$_3$SiO$_{1,5}$) enthält.

c1) 335 g Tetraethoxysilan und 167 g Methyltriethoxysilan werden in 350 g Isopropanol gelöst und mit 150 g einer 0,05 n Salzsäure versetzt und bei Raumtemperatur gerührt. Nach beendeter Umsetzung wird das Gemisch nach 24 Stunden bei Raumtemperatur stehengelassen. Die erhaltene Lösung enthält ein partielles Hydrolyseprodukt von Tetraethoxysilan (9,6%, berechnet als SiO$_2$) und ein partielles Hydrolyseprodukt von Methyltriethoxysilan (6,3%, berechnet als CH$_3$SiO$_{1,5}$).

c2) 415 g Tetraethoxysilan und 85 g Dimethyldiethoxysilan werden in 350 g Isopropanol gelöst, mit 150 g einer 0,05 n Salzsäure versetzt und bei Raumtemperatur gerührt. Nach beendeter Umsetzung wird das Gemisch nach 24 Stunden stehengelassen. Die erhaltene Lösung enthält ein partielles Hydrolyseprodukt von Tetraethoxysilan (12%, berechnet als SiO$_2$) und ein partielles Hydrolyseprodukt von Dimethyldiethoxysilan [4,2%, berechnet als (CH$_3$)$_2$SiO].

Vor Verwendung als Beschichtungsmittel werden die beiden Komponenten gemäss c) im Verhältnis 1:1 miteinander vermischt und in einer Mischung aus 60 Gewichtsteilen n-Butanol, 40 Gew.-Teilen Essigsäure und 20 Gew.-Teilen Toluol gelöst.

Der erfindungsgemässe Zusatz von blockiertem Polyisocyanat erfolgt durch einfaches Vermischen mit der fertiggestellten Grundkomponente.

Herstellung eines blockierten Isocyanats (1)

370 g Malonsäurediethylester werden bei Raumtemperatur mit 2,7 g Natriumphenolat 15 Minuten verrührt. Man setzt 500 g eines biuretisierten Hexamethylendiisocyanats (23,8% NCO-Gruppen) zu und rührt nach Abklingen der exothermen Reaktion 3 Stunden bei 90°C nach. Sodann werden 40 g eines auf n-Butanol gestarteten Ethylenoxid-Polyethers (MG = 2000) und 1 ml Zinn-(II)-octoat zugegeben und weitere 3 Stunden bei 90°C gerührt. Unter Erhöhung der Rührerumdrehungszahl setzt man nun eine Lösung von 46 g Natrium-2,4-diaminobenzolsulfonat in 150 ml Wasser und rührt 2 Stunden bei 60°C. Dann wird mit 800 ml Wasser verdünnt und bis zum Erhalt einer milchig-opaken Emulsion nachgerührt. Die Emulsion enthält ca. 50 Gew.-% Feststoff. Der Gehalt an blockierten NCO-Gruppen beträgt etwa 5%.

Herstellung eines blockierten Isocyanats (2)

67,5 g Butandiol-1,3 werden bei 120°C zu 333 g Isophorondiisocyanat getropft. Man rührt 2 Stunden, kühlt auf 90°C ab und setzt 187 g Malonsäurediethylester zu, in dem zuvor 3 g Natriumphenolat gelöst wurden. Es wird 3 Stunden bei 90°C gerührt. Dann gibt man unter Kühlung auf 70°C eine Lösung von 42 g des Natriumsalzes der 2-(2-Aminoethylamino)ethansulfonsäure in 350 ml Isopropanol zu. Man rührt 2 Stunden und erhält eine wasserverdünnbare, gelblich-trübe Lösung eines blockierten Polyisocyanats. Feststoffgehalt: 70%
NCO-Gehalt (blockiert): 5,4%

Herstellung eines blockierten Isocyanats (3)

Man verfährt ebenso wie in Beispiel 1 angegeben, und setzt nach beendeter Reaktionsfolge anstelle von 800 ml Wasser 200 ml Isopropanol zu. Man erhält eine klare, gelbe, mit Wasser verdünnte Flüssigkeit. Die Lösung enthält ca. 76 Gew.-% Feststoff. Der Gehalt an blockierten NCO-Gruppen beträgt 7,6%.

Beschichten von Substraten und Prüfung der Eigenschaften der Beschichtungen:

3 mm dicke Platten aus handelsüblichen Polycarbonat [Makrolon (R)] oder Polymethylmethacrylat werden mit Wasser und Isopropanol gereinigt und sodann mit den Beschichtungsmassen beschichtet. Die beschichteten Platten werden zur Aushärtung der Beschichtungsmasse in einem Heisslufttrockner 2 Stunden auf 120°C erhitzt.

Die beschichteten Platten werden nach erfolgter Aushärtung 2 Tage bei Raumtemperatur gelagert und sodann folgenden Versuchen unterworfen:

1. Haftfestigkeit auf dem Trägermaterial

Die auf die Platte aufgebrachte ausgehärtete Schicht wird bis zum Substrat mit einer scharfen Klinge kreuzweise eingekerbt, dass 100 Zellen mit einer Fläche von 1 mm² gebildet werden. Ein Cellophanklebeband wird dann fest auf die kreuzweise eingeschnittenen Linien aufgeklebt und mit einem 90° Winkel zur aufgetragenen Schicht abgezogen. Das Verfahren wird dreimal wiederholt. Die erhaltenen Haftungswerte werden in fünf Klassen eingeteilt von 0 (keine Entlaminierung) bis 4 (vollständige Entlaminierung), abhängig von der Zahl der zurückbleibenden Zellen. (DIN 53 151).

2. Kratzbeständigkeit (Stahlwolle-Abriebversuch)

Die beschichtete Oberfläche der Platten wird mit einer Stahlwollprobe der Feinheit 0000 gerieben. Die Ergebnisse werden entsprechend den folgenden drei Kategorien bewertet, abhängig von dem Ausmass, in dem die Oberfläche verkratzt war.

A = Keine Kratzer, selbst bei starkem Reiben der Oberfläche mit Stahlwolle

B = Etwas angekratzt, wenn die Oberfläche mit Stahlwolle gerieben wurde
C = Leicht angekratzt, wenn die Oberfläche mässig mit der Stahlwolle gerieben wurde.

3. Hub-Schubmethode

Die Abriebfestigkeit der mit der Beschichtungsmasse der Erfindung erhaltenen Beschichtung wird durch einen oszillierenden Abrieb-Test nachgewiesen. Dieser Test wird in einer besonderen Vorrichtung durchgeführt, die im wesentlichen aus einer Schüttelplatte in einem Gehäuse besteht, die durch einen Motor hin- und herschwingend mit einer Frequenz von 150 min⁻¹ und einem Hub von 10 cm betrieben wird. An dieser Schüttelplatte wird das zu untersuchende beschichtete Substrat befestigt. Mit Hilfe eines Schleifmittels, das sich in Druckkontakt mit der beschichteten Oberfläche befindet, wird bei konstanter Auflagekraft des Schleifmittels die Anzahl n der Schübe ermittelt, die eine jeweilige Eintrübung der Oberfläche von 2 bzw. 3% bewirkt.

4. Taber-Abriebmethode (ASTM D 1044)

Das Prüfgerät besteht aus einem horizontal angeordneten Teller, auf den der Probekörper aufgespannt wird. Der Teller wird mit einer Drehzahl von 55 ± 6 Umdrehungen/Minute angetrieben. Zwei zylindrische Abriebkörper (CS-10 F) sind vertikal und drehbar so angeordnet, dass sie auf die Oberfläche des Probekörpers unter einer Belastung von je 1000 g schleifend einwirken.

Die Trübung, verursacht durch den Abrieb, wird in einer Photometerkugel nach ASTM 1003 gemessen. Die Trübung wird an zwei Proben im Anlieferungszustand und nach 10, 25, 50, 100 und 200 Umdrehungen gemessen. Die Trübungszunahme (Differenz zwischen Endtrübung und Trübung im Anlieferungszustand) und die Anzahl der Umdrehungen für 5% Trübungszunahme werden angegeben.

5. Sandriesel-Verfahren

Beim Sandriesel-Test lässt man 3000 g Sand (Korngrösse 0,4-0,8 mm) im freien Fall aus einer bestimmten Höhe (etwa 200 cm) und in einem bestimmten Masse (200 g/min) auf die im Winkel von 45° stehende Oberfläche des Prüflings auffallen. Hierbei bilden sich Abriebflecken. Dann wird auf die Oberfläche Licht im Winkel von 45° aufgestrahlt, und die Intensität der Reflexion im Winkel von 45° bestimmt. Die Kratzfestigkeit wird ermittelt aus dem prozentualen Verhältnis der Reflexionsintensitäten nach und vor dem Test.

Ergebnisse

Kratzfestbeschichtungen mit und ohne Zusatzmittel
(Melaminharz bzw. blockiertes Isocyanat)

| Zusatz-mittel zu Grund-kompo-nente a) | Gew.-% Zusatz | Taber-Abra-ser (Test 4) 1000 g Bela-stung Schleifrolle CS 10 Abrieb in mg nach | | Kratz-festigk. Stahlwolle* (Testverf. 2) | Haftung Gitter-schnitt/ Tesa (Testverf. 2) | Hub-Schub-Methode Zahl der Hübe für | | Sandriesel-Verfahren 3 kg Sand Eintrübung in % (Testverf. 5) |
|---|---|---|---|---|---|---|---|---|
| | | 500 n | 1000 n | | | 2% Eintrübung (Test 3) | 3% | |
| Melamin-Formalde-hydharz (Hexameth-oxymethyl-melamin) | 0,7 | 21,9 | 32,6 | vergleich-bar bis wenig besser | 1 | 11,25 | 18 | 9,1% |
| Blockiertes Isocyanat (2) | 1,5 | 4,1 | 7,3 | etwas besser B | 1 | 19,25 | 30,1 | 6,0% |
| (1) | 1,5 | 5,8 | 15,6 | besser A | 1 | 13,0 | 22,7 | 7,9% |
| (3) | 1,5 | 3,9 | 11,4 | deutlich besser A | 1 | 20,2 | 35,5 | 5,3% |
| Ohne Zusatz | — | 4,4 | 13,4 | vergleich-bar C | 3 | 17 | 30 | 13,0% |

* Die Beurteilung der Kratzfestigkeit erfolgte im Vergleichsverfahren zu einem Handelsprodukt auf Basis eines siliconfreien Melaminharzes.

**Patentansprüche**

1. Beschichtungsmasse, bestehend im wesentlichen aus

A) 10-40 Gew.-%, bezogen auf das Gesamtgewicht der Beschichtungsmasse, einer teilweise hydrolysierten Siloxanverbindung, die durch Hydrolyse in Wasser bei etwa 50-80°C während einer Zeit von etwa 1-12 Stunden mindestens einer der folgenden Verbindungen erhalten wird:

(a) eines Kohlenwasserstofftrialkoxysilans der Formel R'Si(OR'')₃, worin R' eine Alkylgruppe mit 1 bis 4 Kohlenstoffatomen, eine Phenyl- oder Vinylgruppe und R'' eine Alkylgruppe mit 1 bis 4 Kohlenstoffatomen bedeuten,

und/oder

(b) Co-Kondensationsprodukten von (a) und 1 bis 40 Gew.-% eines Phenyl- oder Vinyltrialkoxysilans, worin die Alkoxygruppe 1 bis 4 Kohlenstoffatome enthält,

und/oder

(c) Co-Kondensationsprodukten von 1 Mol von (a) und 0,05 bis 1 Mol Tetraalkoxysilan, worin die Alkoxygruppe 1 bis 4 Kohlenstoffatome enthält,

und/oder

(d) Co-Kondensationsprodukten von 1 Mol von (a) und 0,05 bis 1 Mol Dialkyldialkoxysilan, worin die Alkyl- und Alkoxygruppen 1 bis 4 Kohlenstoffatome enthalten,

B) 0 bis 40 Gew.%, bezogen auf das Gesamtgewicht der Beschichtungsmasse, einer wässrigen Dispersion von kolloidalem Siliziumdioxid,

C) 0 bis 5 Gew.-%, bezogen auf das Gesamtgewicht des Überzugsmittels, eines veretherten Methylolmelamins,

D) 0,5 bis 30 Gew.-%, bezogen auf das Gesamtgewicht der Beschichtungsmasse, Essigsäure sowie

E) ein inertes organisches Lösungsmittel, dadurch gekennzeichnet, dass die Beschichtungsmasse zusätzlich 0,05 bis 15 Gew.-%, bezogen auf das Gesamtgewicht der Beschichtungsmasse, eines blockierten Polyisocyanates enthält.

'2. Verwendung von Massen gemäss Anspruch 1 zur Beschichtung von Thermoplasten.

'3. Verwendung von Massen gemäss Anspruch 1 zur Beschichtung von Polycarbonat.

4. Thermoplasten, beschichtet mit einer Beschichtungsmasse gemäss Anspruch 1.

'5. Polycarbonat, beschichtet mit einer Beschichtungsmasse gemäss Anspruch 1.

**Revendications**

'1. Masse à enduire consistant essentiellement en

A) 10 à 40% en poids, par rapport au poids total de la masse à enduire, d'un composé de siloxane partiellement hydrolysé qui est obtenu par hydrolyse dans l'eau à environ 50-80°C pendant une durée d'environ 1 à 12 heures d'au moins un des composés suivants:

(a) d'un hydrocarbure-trialcoxysilane de formule R'Si(OR")₃ où R' signifie un groupe alcoyle ayant 1 à 4 atomes de carbone, un groupe phényle ou vinyle et R" un groupe alcoyle ayant 1 à 4 atomes de carbone,

et/ou

(b) de produits de co-condensation de (a) et de 1 à 40% en poids d'un phényl- ou vinyltrialcoxysilane, où le groupe alcoxy contient 1 à 4 atomes de carbone,

et/ou,

(c) de produits de co-condensation de 1 mole de (a) et 0,05 à 1 mole de tétralcoxysilane, où le groupe alcoxy contient 1 à 4 atomes de carbone,

et/ou

(d) de produits de co-condensation de 1 mole de (a) et 0,05 à 1 mole de dialcoyldialcoxysilane, où les groupes alcoyle et alcoxy contiennent 1 à 4 atomes de carbone,

B) 0 à 40% en poids, par rapport au poids total de la masse à enduire, d'une dispersion aqueuse de dioxyde de silicium colloïdal,

C) 0 à 5% en poids, par rapport au poids total de l'agent de revêtement, d'une méthylolmélamine éthérifiée,

'D) 0,5 à 30% en poids, par rapport au poids total de la masse à enduire, d'acide acétique, de même que

E) un solvant organique inerte, caractérisé en ce que la masse à enduire contient en outre 0,05 à 15% en poids, par rapport au poids total de la masse à enduire, d'un polyisocyanate bloqué.

'2. Utilisation de masses selon la revendication 1 pour l'enduction de thermoplastes.

3. Utilisation de masses selon la revendication 1 pour l'enduction de polycarbonate.

4. Thermoplastes, enduits d'une masse à enduire selon la revendication 1.

'5. Polycarbonate, enduit d'une masse à enduire selon la revendication 1.

**Claims**

1. Coating composition consisting essentially of

A) 10-40% by weight, relative to the total weight of the coating composition, of a partially hydrolysed siloxane compound which is obtained by hydrolysing at least one of the folowing compounds in water at about 50-80°C over a period of about 1-12 hours: (a) a hydrocarbon-trialkoxysilane of the formula R'Si(OR")₃ wherein

R' denotes an alkyl group with 1 to 4 carbon atoms or a phenyl or vinyl group and

R" denotes an alkyl group with 1 to 4 carbon atoms,

and/or (b) co-condensation products of (a) and 1 to 40% by weight of a phenyl- or vinyl-trialkoxysilane, in which the alkoxy group contains 1 to 4 carbon atoms, and/or (c) co-condensation products of 1 mol of (a) and 0.05 to 1 mol of a tetraalkoxysilane, in which the alkoxy group contains 1 to 4 carbon atoms, and/or (d) co-condensation products of 1 mol of (a) and 0.05 to 1 mol of a dialkyldialkoxysilane, in which the alkyl and alkoxy groups contain 1 to 4 carbon atoms,

B) 0 to 40% by weight, relative to the total weight of the coating composition, of an aqueous dispersion of colloidal silicon dioxide,

C) 0 to 5% by weight, relative to the total weight of the coating agent, of an etherified methylolmelamine,

D) 0.5 to 30% by weight, relative to the total weight of the coating composition, of acetic acid and

E) an inert organic solvent, characterised in that the coating composition additionally contains 0.05 to 15% by weight, based on the total weight of the coating composition, of a blocked polyisocyanate.

2. Use of compositions according to Claim 1 for coating thermoplastics.

3. Use of compositions according to Claim 1 for coating polycarbonate.

4. Thermoplastics, coated with a coating composition according to Claim 1.

5. Polycarbonate, coated with a coating composition according to Claim 1.